# EUROPEAN PATENT SPECIFICATION

(11) **EP 1 919 302 B1**
(45) Date of publication and mention of the grant of the patent: **08.06.2011**
(21) Application number: 06765108.3
(22) Date of filing: 27.07.2006
(51) Int. Cl.: A23L 1/22, A23F 5/42, A23L 1/27, A23D 9/06

(54) **FOOD COMPRISING SILICON**
SILIZIUM ENTHALTENDE LEBENSMITTEL
ALIMENT CONTENANT DU SILICIUM

(30) Priority: 27.07.2005 GB 0515353
(43) Date of publication of application: 14.05.2008
(73) Proprietor: PSIMedica Limited, Worcestershire, WR14 3SZ (GB)
(72) Inventor: CANHAM, Leigh Trevor, pSiMedica Ltd, Malvern, Worcs WR14 3SZ (GB)
(74) Representative: Rushton, David John
(86) International application number: PCT/GB2006/002785
(87) International publication number: WO 2007/012847

(56) References cited:
- EP-A- 1 702 886
- WO-A-01/05926
- WO-A-94/13157
- WO-A-2005/016030
- WO-A2-96/37183
- US-A- 5 912 030
- US-A1- 2003 089 884
- US-B1- 6 235 274
- US-B1- 6 673 384
- DATABASE WPI Week 200539 Derwent Publications Ltd., London, GB; AN 2005-372695 XP002402658 & CN 1 579 257 A (YANG Y) 16 February 2005 (2005-02-16)

## Description

### Field of the Invention

The present invention relates to the use of solid elemental silicon in food.

### Background of the Invention

In the food industry, encapsulation may be used to stabilise an ingredient and to control the timing and rate of release of an ingredient. Encapsulation enables the protection of food components to ensure against nutritional loss and to mask or preserve flavours and aromas. Encapsulation also increases the stability of vitamin or mineral supplements which are normally sensitive to light, UV radiation, metals, humidity, temperature and oxygen.

In its simplest form, the encapsulant is typically a small sphere with a uniform wall around it. The material inside the sphere is often referred to as the core material, internal phase or fill, whereas the wall is sometimes called a shell, coating or membrane. However, many encapsulants bear little resemblance to these simple spheres and come in many forms.

Encapsulation techniques include the use of spray drying, spray cooling, fluidised bed technology, coacervation and supercritical fluids. Other techniques include inclusion entrapment, which makes use of structures such as alginate beads and liposomes.

There is a continued need for alternative methods and/or products for protecting, controlling the release of, and/or masking the taste of ingredients in the food industry.

### Summary of the Invention

The present invention is based partly on the surprising finding that, despite being readily absorbed in many body fluids, silicon, and in particular silicon structures of high surface area, for example those greater than 1m²/g such as mesoporous silicon, are stable in food.

In a first aspect of the present invention, food, or a food composition, comprising solid elemental silicon is provided.

According to a further aspect of the present invention, there is provided a production process for said food or food composition, according to the first aspect of the present invention, comprising blending or combining said silicon and other components of the food or food composition.

According to another aspect of the present invention, the use of solid elemental silicon in food for protecting and/or controlling the release of, and/or masking the taste of one or more ingredients is provided.

The silicon may be loaded with one or more ingredients. In particular, the silicon may be loaded such that the one or more ingredients are substantially fully encapsulated by or fully encapsulated by, partially encapsulated by or associated with the silicon which may be referred to as a silicon encapsulant. These ingredients may be selected from one or more of: oxygen sensitive edible oils; minerals; oxygen sensitive fats including dairy fats; oil soluble ingredients; vitamins; fragrances or aromas; flavours; enzymes; probiotic bacteria; prebiotics; nutraceuticals; amino acids; herbal extracts; herbs; plant extracts; edible acids; salt; antioxidants; therapeutic agents.

According to another aspect of the present invention, silicon, suitable for use in the first aspect of the invention, wherein the silicon is loaded with one or more of oxygen sensitive edible oils; minerals; oxygen sensitive fats including dairy fats; oil soluble ingredients; vitamins; fragrances or aromas; flavours; enzymes; probiotic bacteria; prebiotics; nutraceuticals; amino acids; herbal extracts; herbs; plant extracts; edible acids; salt; antioxidants; therapeutic agents is provided.

The one or more ingredients may be released after interaction with gastro-intestinal tract fluids such as saliva, gastric fluid or intestinal fluid.

The use of silicon according to the present invention seeks to provide one or more of the following: effective protection of ingredients to prevent loss of functionality through exposure to heat, light or moisture; an improvement in ingredient stability and/or nutritional quality; high wt% ingredient loading; a so-called burst release of aroma (particularly for use in hot beverages such as coffee); improved bioavailability for loaded ingredients; controlled release of ingredients in the intestine; a barrier to UV/blue light for photosensitive ingredients; easier handling during food processing; masking of particular tastes.

Typical etch rates (measured at about room temperature which is taken to be about 18°C +/- 4°C) for the silicon structures in food, particularly those silicon structures comprising porous silicon, may be less than or equal to about 120nm per day, for example less than or equal to about 80nm per day, for example less than or equal to about 50nm per day, for example less than or equal to about 20nm per day or 10nm per day. At temperatures, corresponding approximately to refrigerator temperatures (for example about 5°C +/-1°C), the etch rate may be less than about 10nm per month.

The silicon being loaded with one or more ingredients includes wherein the silicon is used, in effect to coat or partially coat one or more ingredients. In particular, the silicon may be used to coat or partially coat breakfast cereals and the like or a product or products suitable for making beverages, such as coffee granules, coffee powder, tea, cocoa powder, chocolate powder. For example, when the ingredient is a microparticle (about 5-1000µm in diameter), such as a powder or a small granule, or is a macroparticle (about 1 mm-20mm), such as a granule or a typical cereal, said ingredient may be coated with silicon nanoparticles and/or microparticles.

### Detailed Description of the Invention

### Silicon

As used herein, and unless otherwise stated, the term "silicon" refers to solid elemental silicon. Elemental silicon is usually described as being dark grey in colour. For the avoidance of doubt, and unless otherwise stated, it does not include silicon-containing chemical compounds such as silica, silicates or silicones, although it may be used in combination with these materials. The silicon may be about 95 to 99.99999% pure, for example about 96 to 99.9% pure. So-called metallurgical grade silicon is particularly preferred which typically has a purity of about 98 to 99.5%. The global production of metallurgical silicon is currently equal to about 1 million tons and the cost is about $2/kg.

The physical forms of silicon which are suitable for use in the present invention may be chosen from or comprise amorphous silicon, single crystal silicon and polycrystalline silicon (including nanocrystalline silicon, the grain size of which is typically taken to be 1 to 100nm) and including combinations thereof. Any of the above-mentioned types of silicon, which are suitable for use in the present invention, may be porosified to form porous silicon, which may be referred to as "pSi". The silicon may be surface porosified, for example, using a stain etch method or more substantially porosified, for example, using an anodisation technique. Preferred forms of porous silicon for use in the present invention are mesoporous, microporous or macroporous silicon. Microporous silicon contains pores possessing a diameter less than 2nm; mesoporous silicon contains pores having a diameter in the range of 2 to 50nm; and macroporous silicon contains pores having a diameter greater than 50nm.

Preferred forms of silicon also include: submicron diameter polycrystalline particles; submicron diameter amorphous silicon particles; hollow silicon microparticles; agglomerated silicon nanoparticles; amorphous silicon coatings; micronised silicon alloys; micronised metallurgical grade silicon; cold pressed silicon particles. The silicon may be present in one or more of these forms.

The surface area and the size of the pores in the silicon may to some extent depend on the presence and the nature of the loaded ingredient and, if appropriate, at what point in the body it is required for the ingredient to be released. For example, the BET surface area of the silicon is preferably in excess of 0.1 m²/g for microorganism entrapment, and preferably greater than 100m²/g for biodegradability in intestinal fluid. The BET surface area is determined by a BET nitrogen adsorption method as described in Brunauer et al., J. Am. Chem. Soc., 60, p309, 1938. The BET measurement is performed using an Accelerated Surface Area and Porosimetry Analyser (ASAP 2400) available from Micromeritics Instrument Corporation, Norcross, Georgia 30093. The sample is outgassed under vacuum at 350°C for a minimum of 2 hours before measurement.

The average pore diameter of the silicon is preferably less than 100µm for probiotic entrapment, since bacteria are typically 100nm to 10µm in size. Preferably, the average pore diameter is less than 500nm for enzyme entrapment since protein sizes are in the range of about 5-20nm. Preferably, the average pore diameter is less than 200nm for improving the shelf life of oxygen sensitive nutrients. Preferably, the average pore diameter is less than 10nm for storage of fragrances and volatile nutrients. The average pore diameter is measured using a known technique. Mesopore diameters are measured by very high resolution electron microscopy. This technique and other suitable techniques which include gas-adsorption-desorption analysis, small angle x-ray scattering, NMR spectroscopy or thermoporometry, are described by R. Herino in "Properties of Porous Silicon", chapter 2.2, 1997. Macropore diameters are measured by electron microscopy. Alternative techniques include mercury porosimetry.

The use of silicon according to the present invention may impart a visually appealing appearance to the foods and, as such, according to a further aspect of the present invention, the use of silicon in food or a food composition for modifying the appearance of food is provided. This may include a glittering or glinting appearance. For example, PCT/GB01/03633, describes the use of mirrors comprising layers, which in turn comprise one or more of crystalline silicon, porous silicon, amorphous silicon and polycrystalline silicon in dermatological compositions. By using mirrors, which reflect different wavelengths of light, specific colouration of foods may be effected. This may be achieved by varying the porosities of adjacent layers comprising porous silicon between low and high porosity layers. Typically, the low porosity layers may have a porosity of up to about 65vol%, for example about 25vol% to 65vol% and the high porosity layers have a porosity of at least about 60vol%, for example about 60vol% to 95vol%. Each layer may comprise greater than 10 layers or greater than 100 layers, or greater than 200 layers or greater than or equal to 400 layers. Each layer from which the mirrors are formed has a different refractive index to its neighbouring layer or layers such that the combined layers form a Bragg stack mirror. Specific colours may also be imparted to silicon particles by surface porosification using stain etching or partial oxidation.

### Silicon manufacture and processing

The methods for making the various forms of silicon which are suitable for use in the present invention are well known in the art.

### Porous silicon

In PCT/GB96/01863 it is described how bulk crystalline silicon can be rendered porous by partial electrochemical dissolution in hydrofluoric acid based solutions. This etching process generates a silicon structure that retains the crystallinity and the crystallographic orientation of the original bulk material. Hence, the porous silicon formed is a form of crystalline silicon. Broadly, the method involves anodising, for example, a heavily boron doped CZ silicon wafer in an electrochemical cell which contains an electrolyte comprising a 20% solution of hydrofluoric acid in an alcohol such as ethanol, methanol or isopropylalcohol (IPA). Following the passing of an anodisation current with a density of about 50mA cm⁻², a porous silicon layer is produced which may be separated from the wafer by increasing the current density for a short period of time. The effect of this is to dissolve the silicon at the interface between the porous and bulk crystalline regions. Porous silicon may also be made using the so-called stain-etching technique which is another conventional method for making porous silicon. This method involves the immersion of a silicon sample in a hydrofluoric acid solution containing a strong oxidising agent. No electrical contact is made with the silicon, and no potential is applied. The hydrofluoric acid etches the surface of the silicon to create pores.

Following its formation, the porous silicon may be dried. For example, it may be supercritically dried as described by Canham in Nature, vol. 368, (1994), pp133-135. Alternatively, the porous silicon may be freeze dried or air dried using liquids of lower surface tension than water, such as ethanol or pentane, as described by Bellet and Canham in Adv. Mater, 10, pp487-490, 1998.

Silicon hydride surfaces may, for example, be generated by stain etch or anodisation methods using hydrofluoric acid based solutions. When the silicon, prepared, for example, by electrochemical etching in HF based solutions, comprises porous silicon, the surface of the porous silicon may or may not be suitably modified in order, for example, to improve the stability of the porous silicon in the food or food composition. In particular, the surface of the porous silicon may be modified to render the silicon more stable in alkaline conditions. The surface of the porous silicon may include the external and/or internal surfaces formed by the pores of the porous silicon.

In certain circumstances, the stain etching technique may result in partial oxidation of the porous silicon surface. The surfaces of the porous silicon may therefore be modified to provide: silicon hydride surfaces; silicon oxide surfaces wherein the porous silicon may typically be described as being partially oxidised; or derivatised surfaces which may possess Si-O-C bonds and/or Si-C bonds.

Silicon hydride surfaces may be produced by exposing the porous silicon to HF.

Silicon oxide surfaces may be produced by subjecting the silicon to chemical oxidation, photochemical oxidation or thermal oxidation, as described for example in Chapter 5.3 of Properties of Porous Silicon (edited by L.T. Canham, IEE 1997). PCT/GB02/03731, describes how porous silicon may be partially oxidised in such a manner that the sample of porous silicon retains some porous silicon in an unoxidised state. For example, PCT/GB02/03731 describes how, following anodisation in 20% ethanoic HF, the anodised sample was partially oxidised by thermal treatment in air at 500°C to yield a partially oxidised porous silicon sample.

Following partial oxidation, an amount of elemental silicon will remain. The silicon particles may possess an oxide content corresponding to between about one monolayer of oxygen and a total oxide thickness of less than or equal to about 4.5nm covering the entire silicon skeleton. The porous silicon may have an oxygen to silicon atomic ratio between about 0.04 and 2.0, and preferably between 0.60 and 1.5. Oxidation may occur in the pores and/or on the external surface of the silicon. Derivatised porous silicon is porous silicon possessing a covalently bound monolayer on at least part of its surface. The monolayer typically comprises one or more organic groups that are bonded by hydrosilylation to at least part of the surface of the porous silicon. Derivatised porous silicon is described in PCT/GB00/01450. PCT/GB00/01450 describes derivatisation of the surface of silicon using methods such as hydrosilyation in the presence of a Lewis acid. In that case, the derivatisation is effected in order to block oxidation of the silicon atoms at the surface and so stabilise the silicon. Methods of preparing derivatised porous silicon are known to the skilled person and are described, for example, by J.H. Song and M.J. Sailor in Inorg. Chem. 1999, vol 21, No. 1-3, pp 69-84 (Chemical Modification of Crystalline Porous Silicon Surfaces). Derivitisation of the silicon may be desirable when it is required to increase the hydrophobicity of the silicon, thereby decreasing its wettability. Preferred derivatised surfaces are modified with one or more alkyne groups. Alkyne derivatised silicon may be derived from treatment with acetylene gas, for example, as described in "Studies of thermally carbonized porous silicon surfaces" by J. Salonen et al in Phys Stat. Solidi (a), 182, pp123-126, (2000) and "Stabilisation of porous silicon surface by low temperature photoassisted reaction with acetylene", by S.T. Lakshmikumar et al in Curr. Appl. Phys. 3, pp185-189 (2003).

### Particulate silicon

Methods for making silicon powders such as silicon microparticles and silicon nanoparticles are well known in the art. Silicon microparticles are generally taken to mean particles of about 5 to 1000µm in diameter and silicon nanoparticles are generally taken to mean particles possessing a diameter of about 100nm and less. Silicon nanoparticles therefore typically possess a diameter in the range of about 1nm to about 100nm, for example about 10nm to about 100nm. Fully biodegradable mesoporous silicon typically has an interconnected silicon skeleton with widths in the 2-5nm range. These methods for making silicon powders are often referred to as "bottom-up" methods, which include, for example, chemical synthesis or gas phase synthesis. Alternatively, so-called "top-down" methods refer to such known methods as electrochemical etching or comminution (e.g. milling as described in Kerkar et al. J. Am. Ceram. Soc., vol. 73, pages 2879-2885, 1990.). PCT/GB02/03493 and PCT/GB01/03633, describe methods for making particles of silicon, said methods being suitable for making silicon for use in the present invention. Such methods include subjecting silicon to centrifuge methods, or grinding methods. Porous silicon powders may be ground between wafers or blocks of crystalline silicon. Since porous silicon has lower hardness than bulk crystalline silicon, and crystalline silicon wafers have ultrapure, ultrasmooth surfaces, a silicon wafer/porous silicon powder/silicon wafer sandwich is a convenient means of achieving for instance, a 1-10 µm particle size from much larger porous silicon particles derived, for example, via anodisation.

The surface of silicon particles prepared by "top down" or "bottom up" methods may also be a hydride surface, a partially oxidised surface, a fully oxidised surface or a derivatised surface. Milling in an oxidising medium such as water or air will result in silicon oxide surfaces. Milling in an organic medium may result in, at least partial derivatisation of the surface. Gas phase synthesis, such as from the decomposition of silane, will result in hydride surfaces. The surface may or may not be suitably modified in order, for example, to improve the stability of the particulate silicon in the food or food composition.

Particle size distribution measurements, including the mean particle size (d₅₀/µm) of the silicon particles are measured using a Malvern Particle Size Analyzer, Model Mastersizer, from Malvern Instruments. A helium-neon gas laser beam is projected through a transparent cell which contains the silicon particles suspended in an aqueous solution. Light rays which strike the particles are scattered through angles which are inversely proportional to the particle size. The photodetector array measures the quantity of light at several predetermined angles. Electrical signals proportional to the measured light flux values are then processed by a microcomputer system, against a scatter pattern predicted from theoretical particles as defined by the refractive indices of the sample and aqueous dispersant to determine the particle size distribution of the silicon.

Other examples of methods suitable for making silicon nanoparticles include evaporation and condensation in a subatmospheric inert-gas environment. Various aerosol processing techniques have been reported to improve the production yield of nanoparticles. These include synthesis by the following techniques: combustion flame; plasma; laser abalation; chemical vapour condensation; spray pyrolysis; electrospray and plasma spray. Because the throughput for these techniques currently tends to be low, preferred nanoparticle synthesis techniques include: high energy ball milling; gas phase synthesis; plasma synthesis; chemical synthesis; sonochemical synthesis.

The preferred methods of producing silicon nanoparticles are described in more detail.

### High-energy ball milling

High energy ball milling, which is a common top-down approach for nanoparticle synthesis, has been used for the generation of magnetic, catalytic, and structural nanoparticles, see Huang, "Deformation-induced amorphization in ball-milled silicon", Phil. Mag. Lett., 1999, 79, pp305-314. The technique, which is a commercial technology, has traditionally been considered problematic because of contamination problems from ball-milling processes. However, the availability of tungsten carbide components and the use of inert atmosphere and/or high vacuum processes has reduced impurities to acceptable levels.

Particle sizes in the range of about 0.1 to 1µm are most commonly produced by ball-milling techniques, though it is known to produce particle sizes of about 0.01 µm.

Ball milling can be carried out in either "dry" conditions or in the presence of a liquid, i.e. "wet" conditions. For wet conditions, typical solvents include water or alcohol based solvents. The present inventors have found that, for use in connection with the present invention, isopropanol or water are particularly useful. This usefulness is partly based on the subsequent ability of the silicon to agglomerate, which may be of particular use in encapsulating certain ingredients, such as bacteria.

### Gas phase synthesis

Silane decomposition provides a very high throughput commercial process for producing polycrystalline silicon granules. Although the electronic grade feedstock (currently about $30/kg) is expensive, so called "fines" (microparticles and nanoparticles) are a suitable waste product for use in the present invention. Fine silicon powders are commercially available. For example, NanoSi^{™} Polysilicon is commercially available from Advanced Silicon Materials LLC and is a fine silicon powder prepared by decomposition of silane in a hydrogen atmosphere. The particle size is 5 to 500nm and the BET surface area is about 25m²/g. This type of silicon is particularly useful in the present invention because it has a strong tendency to agglomerate, reportedly due to hydrogen bonding and Van der Waals forces. This agglomeration results in a high surface area form of silicon which is useful for the loading of ingredients therein in a similar manner as porous silicon is when produced by known, for example, electrochemical techniques.

### Plasma synthesis

Plasma synthesis is described by Tanaka in "Production of ultrafine silicon powder by the arc plasma method", J. Mat. Sci., 1987, 22, pp2192-2198. High temperature synthesis of a range of metal nanoparticles with good throughput may be achieved using this method. Silicon nanoparticles (typically 10-100nm diameter) have been generated in argon-hydrogen or argon-nitrogen gaseous environments using this method.

### Chemical synthesis

Solution growth of ultra-small (<10nm) silicon nanoparticles is described in US 20050000409. This technique involves the reduction of silicon tetrahalides such as silicon tetrachloride by reducing agents such as sodium napthalenide in an organic solvent. The reactions lead to a high yield at room temperature.

### Sonochemical synthesis

In sonochemistry, an acoustic cavitation process can generate a transient localized hot zone with extremely high temperature gradient and pressure. Such sudden changes in temperature and pressure assist the destruction of the sonochemical precursor (e.g., organometallic solution) and the formation of nanoparticles. The technique is suitable for producing large volumes of material for industrial applications. Sonochemical methods for preparing silicon nanoparticles are described by Dhas in "Preparation of luminescent silicon nanoparticles: a novel sonochemical approach", Chem. Mater., 10, 1998, pp 3278-3281.

### Mechanical synthesis

Lam et al have fabricated silicon nanoparticles by ball milling graphite powder and silica powder, this process being described in J. Crystal Growth 220(4) p466-470 (2000), which is herein incorporated by reference in its entirety. Arujo-Andrade et al have fabricated silicon nanoparticles by mechanical milling of silica powder and aluminium powder, this process being described in Scripta Materialia 49(8) p773-778 (2003).

### Agglomerated particles

Silicon microparticles or nanoparticles may be transformed into a porous agglomerated form by thermal processing, compression techniques or by the application of centrifugal forces. The agglomerated forms comprise a unitary body with macropores and/or mesopores and/or micropores.

PCT/GB2005/001910 describes how particulate silicon, which may or may not be porous, may be consolidated to form a multiplicity of bonded silicon particles typically under the influence of pressure. The pressure may, for example be applied uniaxially or isostatically. Typical uniaxial pressures may be in the range of 10MPa to 5000MPa and the isostatic pressure may be in the range of 10MPa to 5000MPa.

The consolidation may be carried out such that the unitary body or silicon structure formed possesses a surface area greater than 100cm²/g and preferably greater than 1 m²/g.

The consolidation of the silicon particulate product may result in a porous unitary body, the pores being formed from the spaces between the bonded silicon particles. However, and as mentioned above, the free silicon particles may themselves be porous prior to consolidation, for example by the use of stain etching or anodisation techniques.

The consolidated product or so-called unitary body may itself be further porosified by anodisation or stain etching and/or may be fragmented. Fragmentation techniques include mechanical crushing or the use of ultrasonics.

The formation of the unitary body may be carried out within a selected temperature range. Cold pressing means that the consolidation is carried out up to a temperature of about 50°C and from as low as -50°C.

The surface area of a silicon unitary body formed by a cold pressing technique may be high, relative to that of a silicon unitary body formed by a hot pressing technique. This is because hot pressing can result in rearrangement of the surface silicon atoms, causing cavities and defects to be removed.

The consolidation process may comprise combining the particulate silicon prior, and/or during and/or after consolidation with the ingredient or ingredients to be loaded in such a manner that the ingredient is located in the pores between the bonded silicon particles.

### Food

The food may be in the form of a beverage or non-beverage. Suitable foods for use in the present invention may comprise one or more of the following: meat; poultry; fish; vegetables; fruit; chocolate and confectionary; cereals and baked products including bread, cakes, biscuits, nutrition bars; pastry; pasta; dairy products such as milk, cream, butter, margarine, eggs, ice cream, cheese. The food may be in the form of any of the following: convenience meals; frozen food; chilled food; dried food; freeze dried food; rehydrated food; pickles; soups; dips; sauces.

Suitable beverages include alcoholic and non-alcoholic beverages. Particular examples of suitable drinks include water, for example bottled water; tea; coffee; cocoa; drinking chocolate; fruit juices and smoothies; wine; beer; ales; lager; spirits. The beverages may for example be in the form of granules, including those which have been freeze dried, which are suitable for making instant coffee and tea and the like. As such, the present invention extends to products suitable for making beverages, such as instant beverage powders and granules. These include coffee granules, coffee powder, coffee tablets, tea, cocoa powder, chocolate powder. Other suitable products include coffee oil and concentrates, for example, fruit juice concentrates.

The pH of the food is preferably such that the silicon does not dissolve in the food over a significant period of time and will thus afford an acceptable shelf-life. The pH of the food is typically less than or equal to about 7.5 and preferably less than or equal to about 7 or preferably less than or equal to about 6 and even more preferably less than about 4.6. The lower limit of pH may typically be about 2. For macroporous silicon and micronised metallurgical grade silicon, the typical pH range is 2 to 9 and for mesoporous and silicon nanoparticles, the typical pH range is 2 to 6.

In order to realise the etch rates referred to herein in the "Summary of Invention", the pH of the food is preferably less than or equal to about 7.5 and preferably less than or equal to about 7.

### The loaded ingredient

Preferably, the silicon is present in the food with one or more loaded ingredients. Typically, the one or more ingredients are present in the range, in relation to the loaded silicon, of 0.01 to 60wt%, for example 1 to 40wt% and for example 2 to 10wt%. The ingredients may be selected from at least one of the following: oxygen sensitive edible oils; minerals; oxygen sensitive fats including dairy fats; oil soluble ingredients; vitamins; fragrances or aromas; flavours; enzymes; probiotic bacteria; prebiotics; nutraceuticals; amino acids; herbal extracts; herbs; plant extracts; edible acids; salt; antioxidants.

### Oxygen sensitive edible oils

Oxygen sensitive edible oils include polyunsaturated fatty acids which themselves include canola oil, borage oil, evening primrose oil, safflower oil, sunflower oil, pumpkinseed oil, rosemary oil, rice bran oil, flaxseed oil, wheatgerm oil, grapeseed oil, linseed oil. Some of these oils contribute linoleic acid, alpha-linoleic acid, oleic acid, palmitic acid, stearic acid. Also included are marine oils, for example, those derived from fish such as tuna, herring, mackerel, sardine, cod liver and shark.

Preferably, in order to delay oil degradation, the silicon comprises nanometre sized pores (including porous silicon and agglomerated silicon nanoparticles).

### Minerals and trace elements

Suitable minerals include: macrominerals comprising Ca, P, Mg, Na, K; microminerals comprising Fe, Zn, Cu, Se, Cr, I, Mn, Mo, F. Suitable trace elements include Ni, V, B, Co.

The blending and compression of particular metal powders with silicon powder may be used to create edible microbatteries. Following ingestion, the gastro-intestinal fluid acts as an electrolyte. If the metal is less noble than silicon then the resulting galvanic coupling increases the dissolution of that metal resulting in increased bioavailability.

### Vitamins

Suitable vitamins include Ascorbic Acid, Beta-carotene, Biotin, Choline, Folic Acid, Niacin, Pantothenic Acid (Vitamin B5), Phylloquinone (Vitamin K), Pyridoxine (Vitamin B6), Riboflavin (Vitamin B2), Thiamin (Vitamin B1), Vitamin A, Vitamin B12, Vitamin D, Vitamin E and mixtures thereof. The vitamin and silicon may be combined by allowing the vitamin to impregnate the silicon, optionally in the presence of gentle heat, typically in the range of 40°C and 200°C.

### Fragrances, Aromas and flavours

Suitable fragrances, aromas and flavours are non-toxic and suitable for foodstuffs and will be readily apparent to the skilled person, see Bauer et al, "Common Fragrances & Flavours", Wiley, 1997, pp278. Preferred fragrances, aromas and flavours are "Generally Recognised As Safe" (GRAS) by the FDA. Alcohols, aldehydes, ketones, esters and lactones are classes of compounds most frequently used in natural and artificial fragrances.

More specifically, suitable flavours (or flavouring agents) include: one or more of spice oleoresins derived from allspice, basil, capsicum, cinnamon, cloves, cumin, dill, garlic, marjoram, nutmeg, paprika, black pepper, rosemary and tumeric; essential oils such as anise oil, caraway oil, clove oil, eucalyptus oil, fennel oil, garlic oil, ginger oil, peppermint oil, onion oil, pepper oil, rosemary oil, spearmint oil; citrus oils including orange oil, lemon oil, bitter orange oil and tangerine oil; alliaceous flavours which include garlic, leek, chive, and onion; botanical extracts such as arnica flower extract, chamomile flower extract, hops extract, and marigold extract; botanical flavour extracts such as blackberry, chicory root, cocoa, coffee, kola, liquorice root, rose hips, sarsaparilla root, sassafras bark, tamarind and vanilla extracts; protein hydrolysates such as hydrolyzed vegetable protein (HVP's), meat protein hydrolyzates, milk protein hydrolyzates; natural and artificial compounded flavours which include those disclosed in S. Heath, Source Book of Flavours, Avi Publishing Co., Westport, Conn., 1981, pp. 149-277. Particular flavour compounds are, for example: benzaldehyde, diacetyl (2,3-butanedione), vanillin, ethyl vanillin and citral (3,7-dimethyl-2,6-octadienal). The flavouring agent may be in the form of an oil, aqueous solution, non-aqueous solution or an emulsion. Flavour essences, i.e. the water soluble fraction derived from fruit or citrus can be utilized, and typically at lower levels than the ingredients mentioned above.

Preferably, with regard to fragrant oils, sustained release is carried out using microporous silicon or mesoporous silicon possessing a pore diameter in the range of about 1-10nm. The small pore size suppresses the release of the fragrant volatiles.

Preferred food aromas (or aromatising agents) include food aromas for liquid food products, particularly instant soups and beverages such as coffee. Other suitable food aromas include those used in desserts such as instant puddings, and frozen food products such as frozen pizza. The food aromas may also be those suitable for use in food which needs to be reconstituted with hot water or milk or heated by the consumer prior to consumption. Suitable food aromas include the following: cheese aroma; aromas for hot soluble coffee-based beverages such as coffee, hazelnut, amaretto, chocolate, cream and vanilla; aromas for hot soluble tea-based beverages such as raspberry, cream and vanilla; aromas for hot cocoa-based beverages such as raspberry, amaretto, cream, chocolate and vanilla; aromas for hot soups such as mushroom, tomato, beef and chicken; aromas for beverages such as coffee, tea, cherry, grape, and strawberry; aromas for dessert products such as raspberry, chocolate, butterscotch, cherry, grape, strawberry, banana, and vanilla; aromas for other products such as cream, seafood, meat, garlic and onion. The aroma flavour may be part of an aromatizing composition which may optionally also include one or more other constituents such as a non-volatile edible fat or oil, a surfactant, a wetting agent, a foaming agent, an extremely volatile solvent, a propellant, dissolved edible solids, an antioxidant, or an aroma precursor. The total amount of such additional constituents will preferably not usually be more than about 40% by weight, based on the total weight of the silicon and aroma constituents. Suitable non-volatile edible fats or oils include coffee oil or triglyceride oils used as a source of flavour or as a flavour solvent. A surfactant may also be present which acts as a spreading agent or emulsifier to control the droplet size of the aromatizing composition and its degree of spreading on the surface of a food product. Suitable highly volatile solvents such as acetone and acetaldehyde may be used as a co-solvent for the volatile food aroma and modify the rate of evaporation of the aroma delivery system. A dissolved or entrapped propellant gas such as air, nitrogen, carbon dioxide, nitrous oxide, or a gas generator such as a chemical carbonation reagent, may be included to increase buoyancy or to accelerate aroma release and evaporation. Dissolved edible solids increase the viscosity of the composition. Antioxidant additives such as butylated hydroxyanisole, butylated hydroxyl toluene, tertiary butylhydroquinone, vitamins A, C and E and derivatives, and various plant extracts such as those containing carotenoids, tocopherols or flavonoids having antioxidant properties, may be included to increase the shelf-life of the aromatized carrier. Aroma precursors that would not react during storage but would react to generate aroma during food preparation may also be included in the aromatizing composition.

The production of dehydrated food compositions often involves processing conditions such as elevated temperature, which often causes loss of desirable food aroma. One known technique of overcoming such loss is to add additional aroma and flavour to dehydrated foodstuffs and beverages. Such aromas and flavours are usually complex, comprising many organoleptically active compounds, which combine to create the characterizing aroma of the product. Since aromas and flavours are often extremely powerful and unstable in their undiluted state, they are combined with a carrier to render them more stable and easier to handle. The carriers are preferably neutral or complementary in organoleptic impact and do not contribute to the characterizing aroma of the product. Desirable characteristics of carriers for liquid systems include blandness and miscibility with other liquid carriers and with liquid aromas. Traditional carriers include ethanol, propylene glycol, glycerol, vegetable oil, benzyl alcohol, triacetin, tripropionin, triethyl citrate, and tributyrin.

The aroma constituent of an aromatizing composition characterizes its aroma, i.e., the innate quality that gives the aroma its special attributes among and over other aromas. The aroma constituent may, and often does, include a plurality of aroma ingredients which together result in the characterizing aroma. When a preparation aroma is desired upon rehydration of such flavours and aromas in a dehydrated food or beverage, such compositions are limited in effectiveness because of poor aroma release. When a solid carrier is used, the release of aroma is poor because the diffusion of rehydrating liquid into the particle during rehydration inhibits the counter-diffusion of aroma out. In this way the vast majority of the characterizing aroma constituents end up in the rehydrating liquid. An aroma burst can be obtained by increasing the loading of characterizing aroma constituents into the carrier but this typically leads to an overwhelmingly strong or unbalanced flavour in the product when consumed.

Likewise, poor aroma release is obtained when traditional liquid carriers are used, whether or not they are encapsulated. Those which are water-soluble, suffer the same problems as with soluble solid carriers. The flux of water into the carrier inhibits the diffusion of the aromas out. Furthermore many carriers have a density greater than 1.0 g/cc so they sink in the product during hydration and aromas are released into the rehydrating liquid rather than being released at the surface to effect preparation aroma. Finally, those conventional carriers which do float and are insoluble in water are of an oily or fatty nature. Though these can be arranged to release aroma at the surface they leave an unsightly and often organoleptically and visually undesirable "slick" at the surface of the product.

Natural essential oils from botanical sources are typically intensely flavoured and naturally aromatic due to their inherent volatility. This makes them an ideal choice as aromatizing constituents for use in the manufacture of food products. Unfortunately, volatile essential oils do not exist in all food sources used to manufacture food products. In addition, essential oils that do occur naturally in some foods are often not sufficiently abundant or readily extracted to permit their economical use in processed foods, and some are not approved for food use. Furthermore, many processed foods, due to their intended use, are not able to be manufactured with natural food ingredients that may contain essential oils.

Instant beverage powders typically must quickly and completely dissolve in water without producing insoluble floating or suspended matter or sediment in order to be acceptable to the consumer, and foods or ingredients derived from foods that do contain naturally occurring volatile oils are often not completely water soluble. In response to these limitations, natural or synthetic flavouring agents are typically used to impart the desired character and identity to such food products. In many cases, especially when economically flavoured, the flavouring agent may contain a natural essential oil, such as encapsulated orange oil powders which are used to flavour imitation or orange-flavoured instant beverages. Orange oil is readily and economically pressed from discarded orange peels.

One well known example of food processing that results in loss of aroma is the manufacture of "instant" (or soluble) coffee powder. Unless additional steps are taken in its manufacture, there is very little aroma associated with hot coffee beverages prepared from instant coffee powder relative to the aroma of hot coffee beverages prepared by brewing roast and ground coffee. Many attempts have been made to enhance the aroma of instant coffee products, including the use of particular types of coffee beans, the use of particular coffee roasting conditions, and the addition of coffee aroma. A particular problem which has been noted in connection with instant coffee is the relative lack of coffee aroma that is generated at the time that a hot instant coffee beverage is prepared compared to the coffee aroma that is generated when brewing coffee. This problem of poor preparation aroma (i.e., poor aroma burst or "above-cup aroma" at the time of preparation of an instant coffee beverage) is noted in US 5,399,368 (US '368) and in US 5,750,178 (US '178). Each of these patents, the contents of which are incorporated herein in their entirety by reference, describes several prior art attempts to provide an initial burst of above-cup coffee aroma, such as by coating soluble coffee powder with an aqueous emulsion of an aromatic coffee substance, or by employing particulate aromatized coffee glass. It is reported in US '368 and US '178 that these and other previously known procedures had not been successful in achieving good preparation aroma. US '368 proposes a method of coextruding capsule particles in which a liquid core material containing aromatized coffee oil is encapsulated within a shell of hardened coffee glass. The shell encapsulates a core of aromatized coffee oil saturated with an inert gas under pressure. US '178 also describes known techniques for aromatizing instant coffee and notes that techniques which may provide good package aroma (i.e., aroma in a coffee container) do not provide good preparation aroma. US '178 reports that the method of US '368 provides excellent entrapment of the aroma but that complex machinery and careful control are required. US '178 proposes a modified method of preparing the aromatized coffee capsule particles which method is said to have the advantage of simplicity.

The amount of preparation aroma which can be achieved by incorporating aromatized coffee particles, such as those described in US '368 and US '178, in an instant coffee product, depends in part on the amount of such particles employed. Good preparation aroma can be achieved by employing a sufficient amount of the aromatized capsules. However, the more capsules that are employed, the more capsule material, particularly coffee oil, that is introduced. The added coffee oil accumulates as an oil film on the surface of the coffee beverage. Such oil films are readily apparent and are widely known to impair consumer acceptance of instant coffee.

The present invention provides good food preparation aroma without necessarily requiring the use of natural essential oils or the use of amounts of other ingredients, such as vegetable oils, that would adversely affect the properties of foods.

Silicon, in the form of high porosity micron sized particles is particularly useful in the delivery of a burst of aroma. The porosity of the silicon may be such that the silicon floats on the surface of the beverage thereby releasing the aroma in the desired "above-cup" location. HF etched porous silicon is also useful in this respect - not only can it be made highly porous and micron sized but it may also be hydrophobic. The high temperature (e.g. 70-100°C) of the beverages provide so-called burst release of volatile aromas previously entrapped at room temperature within the mesopores or micropores. The silicon carrier structure need not be water soluble on the timescales needed for aroma release and hence does not need to be fully porous.

The use of silicon according to the present invention provides one or more of the following attributes: tunable density to ensure aroma released from floating not submerged particles; non-toxic nature with full or partial biodegradability into silicic acid; non-oily nature thereby avoiding undesirable "slick" on drink surface; hydrophobicity and nanoscale porosity.

### Enzymes

Suitable enzymes are selected from the classes of carbohydrases, pectic enzymes, celluloses, proteases, oxidases, and lipases. Examples include amylase, bromelain, catalase, ficin, glucoamylase, glucose isomerase, glucose oxidase, invertase, lactase, lipase, papain, pepsin, pullulanase and rennet.

### Probiotic Bacteria

Probiotics are dietary supplements containing potentially beneficial microorganisms or bacteria. More specifically, probiotic refers to microorganisms that form at least a part of the transient or endogenous flora and thereby exhibit a beneficial prophylactic and/or therapeutic effect on the host organism. The prophylactic and/or therapeutic effect of a lactic acid-producing bacteria suitable for use in the present invention may result, in part, from a competitive inhibition of the growth of pathogens due to one or more of the following: (i) superior colonization abilities; (ii) parasitism of undesirable microorganisms; (iii) the production of lactic acid and/or other extracellular products possessing anti-microbial activity. A probiotic bacteria which is suitable for use in the present invention may advantageously possess one or more of the following characteristics: (i) the ability to produce lactic acid; (ii) beneficial function within the gastrointestinal tract; (iii) non-pathogenic. Lactic acid production markedly decreases the pH (i.e., increases acidity) within the local micro-floral environment and does not contribute to the growth of many undesirable, physiologically-deleterious bacteria and fungi. Thus, by the mechanism of lactic acid production, the probiotic inhibits growth of competing pathogenic bacteria. Typical lactic acid-producing bacteria which are useful as probiotics in the present invention include efficient lactic acid producers such as non-pathogenic members of the Bacillus genus which produce bacteriocins or other compounds which inhibit the growth of pathogenic organisms. Exemplary lactic acid-producing, non-pathogenic Bacillus species include, but are not limited to: Bacillus coagulans; Bacillus coagulans Hammer; and Bacillus brevis subspecies coagulans.

Examples of lactic acid-producing Lactobacillus species include, but are not limited to: Lactobacillus acidophilus, Lactobacillus casei, Lactobacillus DDS-1, Lactobacillus GG, Lactobacillus rhamnosus, Lactobacillus plantarum, Lactobacillus reuteri, Lactobacillus gasserii, Lactobacillus jensenii, Lactobacillus delbruekii, Lactobacillus, bulgaricus, Lactobacillus salivarius and Lactobacillus sporogenes (also designated as Bacillus coagulans). Exemplary lactic acid-producing Sporolactobacillus species include all Sporolactobacillus species, for example, Sporolactobacillus P44.

Examples of lactic acid-producing Bifidiobacterium species include, but are not limited to: Bifidiobacterium adolescentis, Bifidiobacterium animalis, Bifidiobacterium bifidum, Bifidiobacterium bifidus, Bifidiobacterium breve, Bifidiobacterium infantis, Bifidiobacterium infantus, Bifidiobacterium longum, and any genetic variants thereof.

The Bacillus species, particularly those species having the ability to form spores (e.g., Bacillus coagulans), are preferred for use in the present invention. The ability to sporulate makes these bacterial species relatively resistant to heat and other conditions, provides for a long shelf-life in product formulations, and is ideal for survival and colonization of tissues under conditions of pH, salinity, and the like within the gastrointestinal tract. Moreover, additional useful properties of many Bacillus species include being non-pathogenic, aerobic, facultative and heterotrophic, thus rendering these bacterial species safe and able to readily colonize the gastrointestinal tract.

### Prebiotics

A prebiotic is a natural or synthetic substance that supports the growth of and/or nurtures probiotics. More specifically the prebiotic is a nondigestible food ingredient that beneficially affects the host by selectively stimulating the growth and/or activity of one or a limited number of bacteria in the colon. They are typically carbohydrates of relatively short length. Examples are the inulin-type fructans such as lactulose and inulin.

### Nutraceuticals

A nutraceutical ingredient provides medical or health benefits, including the prevention and treatment of disease. In general, a nutraceutical is specifically adapted to confer a particular health benefit on the consumer. Suitable nutraceuticals for use in the present invention may be selected from Aloe Vera (Aloe ferox, A. barbadensis), Artichoke, Asian Ginseng (Panax ginseng), Astragalus, Bee Pollen, Bilberry (Vaccinium myrtillus), Black Cohosh, Capsicum-Cayenne, Hot Pepper (Capsicum species), Cascara Sagrada (Rhamnus purshiana), Cat's Claw (Uncaria tomentosa), Chamomile (Matricaria recutita), Cranberry, Dandelion (Taraxacum officinale), Donq Quai (Angelica sinensis), Echinacea (Echinacea purpurea and related species), Evening Primrose Oil (Oenothera biennis), Feverfew (Tanacetum parthenium), Fructo-oligosaccharides, Garlic (Allium sativum), Ginger (Zingiber officinale), Ginkgo (Ginkgo biloba), Ginseng, Glucarate, Glucosamine, Goldenseal (Hydrastis canadensis), Gotu Kola (Centella Asiatica), Grape Seed Extract, Green Tea, Guarana (Paullinacupana), Hawthorne (Crataegus oxyacantha), Inositol, Inulin, Isoflavones, Kava Kava (Piper methysticum), L-carnitine, Lecithin, Licorice (Glycyrrhiza glabra and G. uralensis), Lycopene, Milk Thistle (Silybum marianum), Mod. Citrus Peel, Nettles, Oligofructose, Omega-3s, Passiflora, Passion Flower (Passiflora incarnata), Pau d'Arco, (Tabebuia impetiginosa), Peppermint (Mentha piperita), Phospholipids, Polyphenol, Psyllium (Plantago ovata and P. Major), Pycnogenol, Queroetin D-Ilmonene; Reishi, Ribonucleic Acid, Royal Jelly, St. John's Wort (Hypericum perforatum), Saw Palmetto (Serenoa repens; Sabal serrulata), Schisandra, Soybean Isoflavones, Tumeric Valerian (Valeriana officinalis) and mixtures thereof.

### Amino acids

Suitable amino acids for use in the present invention may be selected from Alanine, Arginine, Aspartic Acid, Asparagine, Carnitine, Cysteine, Cystine, Glutamic Acid, Glutamine, Glutathione, Glycine, Histidine, Isoleucine, Leucine, Lysine, Methionine, Ornithine, Phenylalanine, Proline, Serine, Taurine, Threonine, Tryptophan, Tyrosine, Valine and mixtures thereof.

### Plant extracts and herbs

Suitable plant extracts include one or more plant sterols, these include beta-sitosterol, campesterol, stigmasterol. Suitable plant stanols include sitostanol, octacosanol, policosanol.

Suitable herbs include black walnut, burdock, chamomile, comfrey, Echinacea, eucalyptus, hawthorn, hyssop, ginkgo, hyssop, lemon balm, milk thistle, mullein, peppermint, psyllium, sage, saw palmetto, sheep sorrel, slippery elm, St John's Wort, thyme, turkey rhubarb, valerian, vitex.

Herbs suitable for use for medicinal purposes are described in The Natural Pharmacy by M. Polunin & C. Robbins (Dorling Kindersley 1999), 144pp. In particular, pages 30 -131 list suitable herbs. Suitable culinary herbs are described in Food Commodities, 2nd Edition pp158-163 by B. Davis (Butterworth Heinemann 1994).

### Edible acids

Suitable edible acids for use in the present invention may be selected from citric acid, ascorbic acid, malonic acid, acetic acid, tartaric acid, sorbic acid, fumaric acid, malic acid, phosphoric acid, succinic acid and nicotinic acid.

### Antioxidants

Suitable antioxidants for use in the present invention may be selected from sodium carbonate, calcium carbonate, butylated hydroxyanisole (BHA), butylated hydroxytoluene (BHT), lecithins, sodium lactate, calcium lactate, calcium malate and ammonium citrate.

### Food preparation

Methods for incorporating the silicon into food are numerous. Suitable mixing equipment for use in the present invention is diverse and includes, for example, screw mixers, ribbon mixers and pan mixers. Other examples include high speed propeller or paddle mixers for liquid food or beverages; tumble mixers for dry powders; Z-blade mixers for doughs and pastes. Suitable grinding machines include hammer, disc, pin and ball millers. Extrusion is an important very high throughput (about 300-9000kg/hr) technique for mixing and providing shape to foodstuffs and is suitable for use in the present invention. Cold and hot extruders may be used. These can be single or twin screw. Extruded foods include cereals, pasta, sausages, sugar or protein based products.

The ingredient may be combined with the silicon prior and/or during and/or after the mixing process.

The ingredient or ingredients may be loaded onto and/or into the silicon in various ways. For example, the one or more ingredients may be deposited onto the surface of the silicon particles, incorporated into the pores of porous silicon, incorporated into the pores formed by the agglomeration or consolidation of silicon particles (particularly nanoparticles) or bound or otherwise associated with the surface of the silicon. For example, the silicon may be used, in effect to coat or partially coat one or more ingredients. In particular, the silicon may be used to coat or partially coat breakfast cereals or a product or products suitable for making beverages, such as coffee granules, coffee powder, tea, cocoa powder, chocolate powder. Suitable methods for loading the ingredient with the silicon include the techniques of pan coating, fluidised bed, spray drying, spray chilling, enrobing, dusting/breading, coextrusion. Of these physical methods, spray drying of a silicon suspension is preferred. These are all well known techniques, details of which may be found in standard texts, for example, for a number of these techniques see Food Processing Technology, Principles and Practice by PJ Fellows, second edition, Woodhead Publishing Ltd.

The ingredient to be loaded with the silicon may be dissolved or suspended in a suitable solvent, and silicon particles may be incubated in the resulting solution for a suitable period of time. Both aqueous and non-aqueous slips have been produced from ground silicon powder and the processing and properties of silicon suspensions have been studied and reported by Sacks in Ceram. Eng. Sci. Proc., 6, 1985, pp1109-1123 and Kerkar in J. Am. Chem. Soc. 73, 1990, pp2879-85. The removal of solvent will result in the ingredient being deposited on the surface of the silicon particles. However, if the particles comprise porous silicon, or agglomerated or consolidated particles (for example, agglomerated or consolidated nanoparticles) of silicon the solution of the ingredient will penetrate into the pores of the silicon by capillary action, and, following solvent removal, the ingredient will be present in the pores. Preferred solvents are water, ethanol, and isopropyl alcohol, GRAS solvents and volatile liquids amenable to freeze drying.

Higher levels of loading, for example, at least about 15wt% of the loaded ingredient based on the loaded weight of the silicon may be achieved by performing the impregnation at an elevated temperature. For example, loading may be carried out at a temperature which is at or above the melting point of the ingredient to be loaded. Quantification of gross loading may conveniently be achieved by a number of known analytical methods, including gravimetric, EDX (energy-dispersive analysis by x-rays), Fourier transform infra-red (FTIR), Raman spectroscopy, UV spectrophotometry, titrimetric analysis, HPLC or mass spectrometry. If required, quantification of the uniformity of loading may be achieved by techniques that are capable of spatial resolution such as cross-sectional EDX, Auger depth profiling, micro-Raman and micro-FTIR.

The loading levels can be determined by dividing the volume of the ingredient taken up during loading (equivalent to the mass of the ingredient taken up divided by its density) by the void volume of the porous silicon prior to loading multiplied by one hundred

The total quantity of silicon present in the food according to the present invention, may be about 0.01 to 50wt%, preferably from about 0.01 to 20wt% and even more preferably 0.1 to 5wt%.

### Brief Description of the Drawings

Embodiments of the invention will now be described, by way of example only and without limitation, with reference to the accompanying drawings, in which:
Figures 1a and 1b illustrate the effects of mesopororus silicon on the shelf life of coffee granules.
Figures 2a and 2b illustrate the effects of mesopororus silicon on the shelf life of coffee granules under humid conditions.
Figures 3a and 3b illustrate the release kinetics of a mesoporous silicon sample loaded with peppermint oil and an unloaded mesoporous silicon sample, respectively.

### Examples

Embodiments of the present invention will now be described, by way of example only, with reference to the following examples.

### Example 1: High surface area silicon fabrication

The fabrication of high surface area silicon powders with equipment that is scaleable to high throughput is demonstrated by Example 1.

Metallurgical grade silicon of purity 99.1 wt% with major impurities Fe (0.48wt%) Al (0.19wt%) and Ca (0.07wt%) and commercially available in micronised form, with a particle size distribution of d₁₀ = 1.40µm, d₅₀= 6.19 µm and d₉₇ = 42.37 µm, was used. The dry powder was subjected to high energy wet milling in a Hosokawa Alpine 90 AHM cylindrical ball mill. The grinding media was zircon oxide (diameter 0.4-0.7mm) with a silicon carbide lining. Circulation grinding was used. The drive motor was run at 2.2kW and the mill volume at 0.25 litres. Runs A1 and A2 used isopropanol (IPA) as the liquid carrier. For Runs B1-B3, the grinding of the silicon was carried out in water. Table 1 summarises the milling conditions and particle size distribution characteristics of the particles produced.

**Table 1**

| **Run No.** | **Mill speed (rpm)** | **Solids conc. (wt%)** | **Mill motor (kW)** | **Volume flow (l/min)** | **Milling time min** | **Energy consumption (kWh/t)** | **d₅₀(nm) milled silicon** | **d₉₇(nm) milled silicon** |
|---|---|---|---|---|---|---|---|---|
| A1 | 1580 | 0.28 | 0.22 | 0.2 | 210 | 1160 | 1230 | 2570 |
| A2 | 1890 | 0.28 | 0.27 | 0.2 | 310 | 1680 | 860 | 1800 |
| B1 | 2860 | 0.29 | 1.16 | 0.8 | 240 | 3664 | 420 | 1110 |
| B2 | 3170 | 0.29 | 1.05 | 0.5 | 300 | 3864 | 430 | 980 |
| B3 | 3170 | 0.29 | 0.96 | 0.5 | 360 | 4415 | 400 | 890 |

The data in Table 1 demonstrates that, following a few hours milling time, average particle size can be reduced to the submicron diameter range, for both of the liquid media investigated.

Runs B1-B3, which were conducted in the presence of water, were carried out under higher energy milling conditions. Within five hours, 97% of particles had diameters below 1 micron, with 50% having diameters less than 430nm. The estimated surface areas were in the range 5-100m²/g. For comparison, mesoporous silicon of 60% porosity prepared by anodisation, has surface areas around 200m²/g.

High resolution cross-sectional scanning electron microscopy (HRSEM) images and EDX spectra were generated in order to assist in the analysis of the milled material. The EDX spectra showed that milling in water introduces significant oxidation and a more hydrophilic surface. The surface may, optionally, be treated with HF in order to remove the oxidation at the surface.

Milling in IPA introduces significantly less oxidation according to the EDX spectra generated but may, for example, leave Si-C bonding at the surface and thus a more hydrophobic surface. The IPA milled material could thus provide the additional benefit of adsorbing hydrocarbons from plastic packaging which is intended for use with food.

### Example 2: Stability in food and drink

The stability of porous silicon was tested in a range of foods and drinks. Tests were carried out at 5°C and 18°C which were taken to be representative of refrigerated and room temperature conditions. Samples A and B were prepared. Sample A is a porous silicon sample possessing a porosity of 70vol% (+/- 10%), and a thickness of 0.63µm (+/- 0.02µm) on non-porous bulk silicon. Sample A was prepared via the anodisation, under constant current density of 100mA/cm² for 10 seconds, of a non-porous bulk silicon sample. The electrolyte comprised equal volumes of 40wt% HF and MeOH and the p+ silicon wafer had a resistivity of 5-20mΩcm.

Sample B is a porous silicon sample possessing a porosity of 75vol% (+/- 5%), and a thickness of 3.53µm (+/- 0.02µm). Sample B possesses a 200nm thick outer region of 54vol% (+/- 10%) porosity. Sample B was prepared via the anodisation, under.varying current density of 5mA/cm² for 30 seconds followed by 50mA/cm² for 120 seconds, of a non-porous bulk silicon sample. The electrolyte comprised 40wt% HF and isopropanol in a 2:1 volume ratio and the p+ silicon wafer had a resistivity of 0.89-1.34mΩcm.

Samples A and B were immersed in a range of foods and drinks. HRSEM was used to monitor the thickness of the porous silicon over time thus giving estimates of the rates of corrosion. The results are presented in Table 2.

**Table 2**

| **Sample** | **Foodstuff/Beverage** | **Temp (°C)** | **pH** | **Etch rate** |
|---|---|---|---|---|
| A | Mineral water | 18 +/- 4 | 8.1 | >1 µm/day |
| A | Mineral water | 18 +/- 4 | 7.9 | ~600nm/day |
| A | Mineral water | 18 +/- 4 | 7.2 | ~120nm/day |
| A | Soda water | 18 +/- 4 | 3.5 | ~70nm/day |
| A | Coca Cola | 18 +/- 4 | 2.5-4.2 | <10nm/day |
| A | Tonic water | 18 +/- 4 | | <5nm/day |
| A | Red wine | 18 +/- 4 | 3.0-3.5 | <2nm/day |
| B | Malt vinegar | 18 +/- 4 | 2.0-3.4 | <1nm/day |
| B | White wine | 5 +/- 1 | 3.0-3.5 | ~400nm/month |
| B | Lager | 5 +/- 1 | 4.4-4.7 | ~200nm/month |
| B | Mineral water | 5 +/- 1 | 7.8 | ~200nm/month |
| A | Milk | 5 +/- 1 | 6.2-7.3 | ~20nm/month |
| B | Pineapple juice | 5 +/- 1 | 3.5 | <10nm/month |
| A | Cheese (Camembert) | 5 +/- 1 | 7.4 | ~300nm/month |
| A | Cheese (Philadelphia) | 5 +/- 1 | 5.9 | ~200nm/month |
| A | Cheese (Cheddar) | 5 +/- 1 | 4.9 | <100nm/month |
| B | Yoghurt | 5 +/- 1 | 4.5 | <160nm/month |
| B | Mayonnaise | 5 +/- 1 | 4.2-4.5 | ~100nm/month |

### Example 3

Metallurgical grade silicon microparticles possessing a d₅₀ of 10µm are partially porosified via a stain-etching method in an HF based solution to provide a high density of pores in the range of 5 to 50nm diameter. Fish oil, ranging in an amount of 10wt% to 60wt% of the silicon is incorporated via the action of capillary flow which may optionally be in the presence of additional hydrostatic pressure.

### Example 4

Metallurgical grade silicon powder possessing a d₅₀ of 50µm is dipped in HF to remove the oxide coating, rinsed and seeded with probiotic culture. The bacteria coated particles are then consolidated by cold pressing.

### Example 5

Metallurgical grade silicon particles are partially compressed into porous electrodes by cold pressing. The compressed particles are then subjected to anodisation in concentrated (40-50wt%) HF to create microporous silicon, see Canham J. Appl. Phys., 72, 1992, p1232. Fragrant oils are loaded by gaseous transport and capillary condensation.

### Example 6

Ferrosilicon feedstock containing 75wt% silicon and 25wt% iron is subjected to mechanical attrition using high energy ball milling to produce high surface area powder with particles in the range of 0.1 - 10µm possessing a mean diameter of 1µm and a d₅₀ of 5µm. Alternatively, pure iron powder may be blended with silicon powder and co-milled.

### Example 7

Metallurgical grade silicon is micronised by mechanical attrition to particles of 10µm mean diameter and a d₅₀ of 50µm. These are stain etched to a level of porosity which is in the range 60-80% (equivalent to 0.5-0.9g/cm³). The pore diameters are typically in the range 2-10nm. Coffee oil is impregnated by capillary condensation at room temperature, which may carried out with the assistance of pressure. The preferred density of the aroma loaded particles is less than that of hot coffee or soup; i.e. suitably less than 1.2 g/cm³ and preferably in the range 0.8-1.0g/cm³. The silicon particles are mixed with the coffee oil at a range of 0.1-10 wt% ratio.

### Example 8

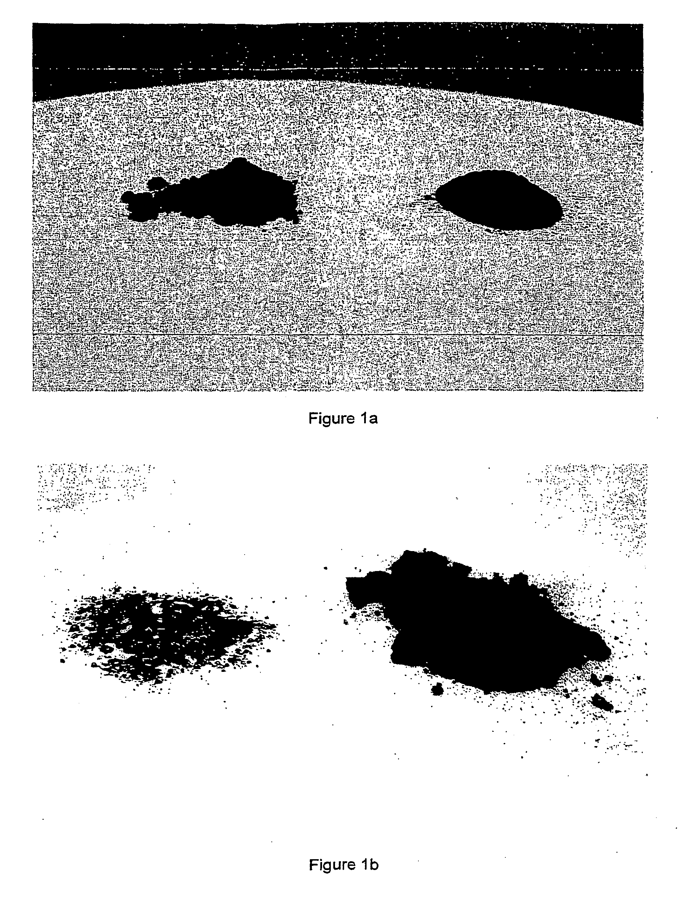

The effect of porous silicon powder on the shelf life of coffee was investigated. A mesoporous silicon membrane of 70vol% porosity was lifted off a wafer by applying a high current density pulse, and hand milled into microparticles of a broad size distribution. Nescafe coffee granules were also hand milled. A portion of the milled granules were then manually mixed with the milled porous silicon (50:50 wt% ratio). The mixture was stored in air over a period of five days. The air humidity varied widely over the range 20%-70% relative humidity. Temperature variations between night and day would also have varied significantly, but were not recorded. Figures 1a and 1b show pure coffee on the left and the silicon/coffee mixture on the right before and after five days of storage respectively. It is clearly evident that the sample consisting of only coffee has started to clump and go sticky, thus illustrating the oxygen scavenging and/ or water repellancy capabilities of the mesoporous silicon in the other sample.

### Example 9

The resistance to humid conditions was investigated for freeze-dried instant coffee (Kenco Decaffeinated, Best Before Sep 07 L5256), with and without mesoporous silicon.

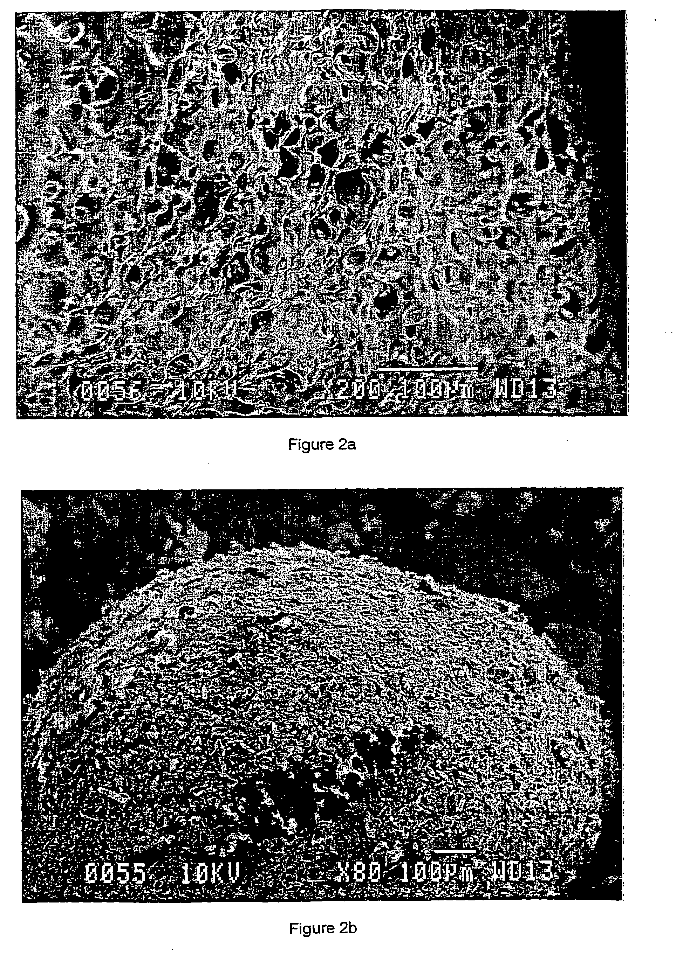

A blend of 10wt% porous silicon and 90wt% coffee, prepared by simple physical agitation of powder and granules, was compared with pure coffee under water saturated air (100% humidity) at 23°C +/- 2°C for 2.5 hrs in the dark. The pure coffee sample took on the characteristic "sticky" resinous appearance of heavily oxidised material. The surface had the porous molten-like morphology shown in Figure 2a. In contrast, the blend maintained its granular nature as shown in Figure 2b. The area devoid of porous silicon particles in Figure 2b illustrates where a small amount of water has ingressed.

### Example 10

A process to form uniform composites suitable for use as coffee tablets was investigated. Coffee granules were cold-pressed with porous silicon and a hygroscopic binder with applied forces between 3 and 12 kN (kilo Newtons). The dissolution of the tablets was studied in freshly boiled water. The tablet took about 10 seconds to dissolve, thereby releasing the porous silicon microparticles to the surface meniscus.

### Example 11

Mesoporous silicon micro particles possessing a broad particle size distribution were shown to float effectively on boiling water and hot coffee simply by adding hot water to mesoporous silicon particles and a mixture of coffee and silicon microparticles.

### Example 12

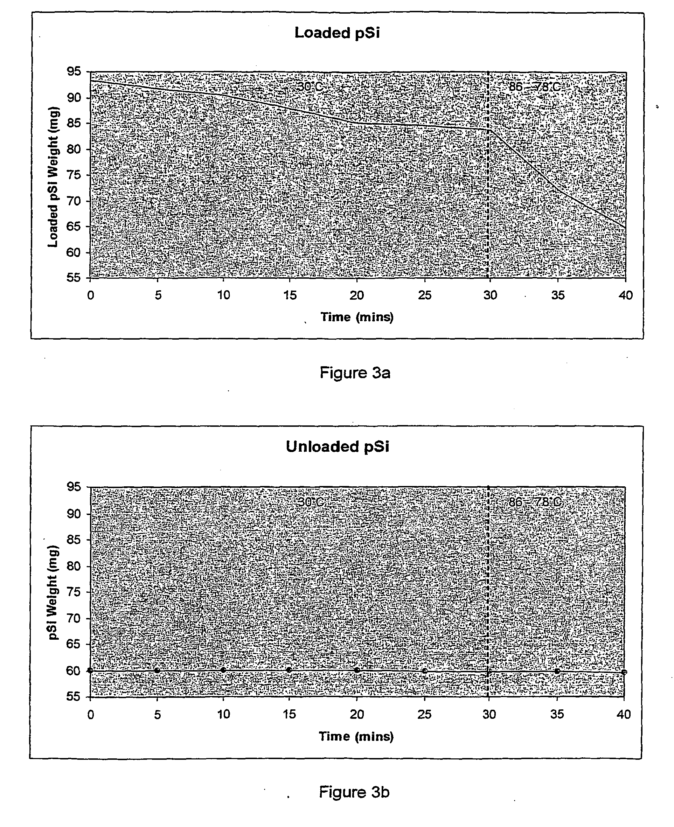

To quantify the release kinetics of a flavour (and aroma) from floating mesoporous silicon, gravimetric measurements were made on large membrane segments of mesoporous silicon in water. A 52.64mg membrane segment was immersed in pure peppermint oil (Cariad, UK), then excess oil removed on filter paper. The loaded sample was then floated on 200ml of deionised water in a 250ml coffee mug at 30°C, periodically removed, dried and weighed to monitor the oil loss to the water underneath and the air above. After 30 minutes, the water was replaced with freshly boiled water and the temperature was monitored as it cooled over the next 10 minutes. The membrane was floated on the hot water and its weight measured after 5 minutes and then after 10 minutes. Figure 3a illustrates the gravimetric measurements. There is a dramatic increase in flavour release when hot water is introduced and a strong peppermint aroma could be detected in the "headspace" above the water. The effect is more pronounced for microparticles then a membrane and when boiling water is poured directly onto the oil loaded structures. As a control experiment, the experiment was repeated with an unloaded 60mg membrane. The results for the control experiment are illustrated in Figure 3b. Figures 3a and 3b confirm that the rapid weight loss seen in hot water is not the result of silicon dissolution but is due to the release of flavour and/or aroma.

### Example 13

Mesoporous silicon membrane segments of silicon (C - E), possessing a porosity of 65vol% and a thickness of 158µm, were immersed in pure linseed oil. The fatty acid component of linseed oil contains more than 50wt% alpha linoleic acid (ALA) and is an essential fatty acid. ALA is known to be sensitive to both heat and light. The linseed oil was purchased from Aldrich (catalogue number 430021, contains 0.5wt% lead napthenate).

Incorporation of the linseed oil, which is of low viscosity and low volatility, was assessed gravimetrically. The results are presented in Table 3. The density of the linseed oil in the pores was assumed to be that of the bulk liquid (0.93g/cm³). Cross sectional Energy Dispersive X-Ray analysis was used to confirm incorporation of the linseed oil throughout the material.

**Table 3**

| **Mesoporous silicon sample** | **Dry weight (mg)** | **Pore volume (cm³)** | **Wet weight (mg)** | **Weight increase (mg)** | **Weight % loading** | **Pore volume % loading** |
|---|---|---|---|---|---|---|
| C | 34.2 | 0.0273 | 58.3 | 24.1 | 41 | 94 |
| D | 24.3 | 0.0196 | 41.5 | 17.2 | 41 | 95 |
| E | 35.3 | 0.0285 | 60.9 | 25.6 | 42 | 97 |

### Example 14

Mesoporous silicon membrane segments of silicon (F-H), possessing a porosity of 65vol% and a thickness of 158µm, were immersed in a high viscosity liquid form of vitamin E (Aldrich Cat 25,802-4) for different periods of time at room temperature. Vitamin E is sensitive to light, heat and oxygen. Its stability can be affected when stored in food for relatively short periods of time. Natural sources of vitamin E include vegetable and soybean oils. Synthetic versions tend to be cheaper but have lower biological activity. Table 4 illustrates the effects of immersion times on the degree of loading.

**Table 4**

| **Mesoporous silicon sample** | **Dry weigh (mg)** | **Pore volume (cm³)** | **Immersion time (seconds)** | **Wet weight (mg)** | **Weight increase (mg)** | **Weight % loading** |
|---|---|---|---|---|---|---|
| F | 13.0 | 0.0104 | 60secs | 16.66 | 3.66 | 22 |
| G | 16.88 | 0.0135 | 5mins | 24.04 | 7.16 | 30 |
| H | 21.90 | 0.0175 | 16hrs | 37.81 | 15.91 | 42 |

### Example 15

Mesoporous silicon membrane segments of silicon, possessing a porosity of 65vol% and a thickness of 158µm, were immersed in a plant/vegetable oil blend (Vertese^{™} Omega 3&6&9 formulation). The oil blend includes sunflower oil, pumpkinseed oil, wheatgerm oil, rosemary oil, rice bran oil and evening primrose oil. These oils contribute alpha-linolenic acid, linoleic acid, oleic acid palmitic acid and stearic acid. The capsules were broken and the oil blend extracted and pooled. Immersion of the silicon sample was carried out for 1 hour and at room temperature. The sample was removed and excess oil removed by filter paper. The weight increase was equivalent to an average of 41wt% loading throughout the silicon. Cross sectional EDX measurements confirmed the high loading levels with only slightly higher incorporation near the external surfaces of the porous silicon. The very high carbon to oxygen ratio was consistent with the chemical composition of such oils.

### Example 16

Lycopene (C₄₀H₅₆) belongs to the carotenoid family and is a natural red pigment which is synthesised by plants but not by animals. Lycopene is often not lost through cooking or food processing although it is easily oxidised. However, lycopene is very hydrophobic and this limits its bioavailability.

The liquid contents of Lyc-O-Mato^{™} (6% strength oily dispersion) from Lycored Natural Products Industries Ltd, Israel were pooled. A 69% porosity membrane segment of a 164µm thickness sample of porous silicon was immersed for 18 hours at room temperature in the pooled liquid contents.

Cross sectional EDX measurements confirm the high loading levels of the lycopene in the porous silicon. Only slightly higher loading levels were detected near the external surfaces of the porous silicon. The detected levels of oxygen are indicative of carrier fluid penetration, since unoxidised lycopene contains no oxygen.

## Claims

1. Food, or a food composition, comprising solid elemental silicon.

2. Food or a food composition according to claim 1, wherein the silicon comprises one or more of amorphous silicon, single crystal silicon and polycrystalline silicon.

3. Food or a food composition according to claim 1 or 2, wherein the silicon is porous silicon.

4. Food or a food composition according to the previous claim, wherein the porous silicon is selected from one or more of microporous silicon, mesoporous silicon or macroporous silicon.

5. Food or a food composition according to claim 3 or 4, wherein the porous silicon comprises or consists essentially of porous silicon wherein the surfaces of said porous silicon have not been further modified following the formation of the porous silicon.

6. Food or a food composition according to claim 3 or 4, wherein the porous silicon comprises or consists essentially of surface modified silicon.

7. Food or a food composition according to the previous claim, wherein the surface modified porous silicon comprises or consists essentially of one or more of: derivatised porous silicon, partially oxidised porous silicon, porous silicon modified with silicon hydride surfaces.

8. Food or a food composition according to claim 5, wherein the surfaces of the porous silicon comprise or consist essentially of one or more of partially oxidised porous silicon, silicon hydride surfaces.

9. Food or a food composition according to any one of claims 1 to 8, wherein the silicon comprises agglomerated or consolidated silicon particles.

10. Food or a food composition according to the previous claim wherein the silicon comprises agglomerated or consolidated silicon nanoparticles.

11. Food or a food composition according to any one of claims 1 to 8, wherein the silicon comprises or consists essentially of one or more of submicron diameter polycrystalline particles, submicron diameter amorphous silicon particles, hollow silicon microparticles, amorphous silicon coatings, micronised silicon, micronised silicon alloys.

12. Food or a food composition according to any one of claims 1 to 11, wherein the silicon comprises or consists essentially of metallurgical grade silicon.

13. Food or a food composition according to any one of the previous claims, wherein the pH of the food or food composition is 2 to 9.

14. Food or a food composition according to claim 13, wherein the pH is less than 7.5.

15. Food or a food composition according to the previous claim, wherein the pH is less than or equal to 7.

16. Food or a food composition according to the previous claim, wherein the pH is less than or equal to 6.

17. Food or a food composition according to any one of claims 3 to 16, wherein the porous silicon has a BET surface area in excess of 0.1m²/g.

18. Food or a food composition according to the previous claim, wherein the porous silicon has a BET surface area in excess of 100m²/g.

19. Food or a food composition according to any one of the preceding claims, wherein the silicon is present in an amount of 0.01 to 50 wt% of the total weight of the food or food composition.

20. Food or a food composition according to the previous claim, wherein the silicon is present in an amount of 0.01 to 20wt%.

21. Food or a food composition according to the previous claim, wherein the silicon is present in an amount of 0.1 to 5wt%.

22. Food or a food composition according to any one of claims 1 to 21, wherein the food comprises or consists essentially of one or more of the following: meat; poultry; fish; vegetables; fruit; chocolate; sweets; cereals and baked products including bread, cakes, biscuits, nutrition bars; pastry; pasta; dairy products such as milk, cream, butter, margarine, eggs, ice cream, cheese; products suitable for making beverages such as coffee granules, coffee tablets, coffee oil, coffee powder, tea, cocoa powder, chocolate powder, concentrates.

23. Food or a food composition according to any one of claims 1 to 22, wherein the silicon is loaded with at least one food ingredient.

24. Food or a food composition according to claim 23, wherein the silicon encapsulates or substantially encapsulates or partially encapsulates the food ingredient.

25. Food or a food composition according to either of claims 23 or 24, wherein the food ingredient is selected from at least one of the following: oxygen sensitive edible oils; minerals; oxygen sensitive fats including dairy fats; oil soluble ingredients; vitamins; fragrances or aromas; flavours; enzymes; probiotic bacteria; prebiotics; nutraceuticals; amino acids; herbal extracts; herbs; plant extracts; edible acids; salt; antioxidants, therapeutic agents.

26. Food or a food composition according to claim 23, wherein the silicon coats or partially coats the food ingredient.

27. Food or a food composition according to claim 24 or 26, wherein the food ingredient is a breakfast cereal or one or more products suitable for making beverages, such as coffee granules, coffee powder, tea, cocoa powder, chocolate powder.

28. Food or a food composition according to any one of claims 23 to 27, wherein the at least one food ingredient is present in an amount of 0.01 to 60wt% of the total weight of the silicon including the one or more ingredients.

29. Food or a food composition according to the previous claim, wherein the at least one food ingredient is present in an amount of 1 to 40wt%.

30. Food or a food composition according to the previous claim, wherein the at least one food ingredient is present in an amount of 2 to 10wt%.

31. Food or a food composition according to any one of claims 1 to 30, wherein the food or food composition is in the form of a beverage.

32. A food or food composition according to the previous claim, wherein the beverage is selected from water, tea, coffee, cocoa, drinking chocolate, fruit juice, smoothie, wine, beer, ales, lager, spirits.

33. A food or food composition according to the previous claim, wherein the beverage is coffee.

34. A food or food composition according to the previous claim, wherein the silicon is loaded with coffee oil.

35. A food or food composition according to claim 33, wherein the coffee is in the form of granules or a powder or a tablet and may optionally be freeze dried.

36. A production process for making the food or a food composition according to any one of the previous claims comprising blending or combining the silicon with other components of the food or food composition.

37. Use of solid elemental silicon in food or a food composition as claimed in any one of claims 1 to 35, for protecting and/or controlling the release of, and/or masking the taste of one or more ingredients.

38. Use of solid elemental silicon in food or a food composition as claimed in any one of claims 1 to 35, for modifying the appearance of food.

39. Use according to the previous claim, wherein the colour of the food is modified and/or the food glitters or glints.

## Patentansprüche

1. Lebensmittel oder eine Lebensmittelzusammensetzung, umfassend festes elementares Silicium.

2. Lebensmittel oder eine Lebensmittelzusammensetzung gemäß Anspruch 1, wobei das Silicium eines oder mehrere umfasst aus amorphem Silicium, Einkristall-Silicium und polykristallinem Silicium.

3. Lebensmittel oder eine Lebensmittelzusammensetzung gemäß Anspruch 1 oder 2, wobei das Silicium poröses Silicium ist.

4. Lebensmittel oder eine Lebensmittelzusammensetzung gemäß dem vorhergehenden Anspruch, wobei das poröse Silicium ausgewählt ist aus einem oder mehreren aus mikroporösem Silicium, mesoporösem Silicium oder makroporösem Silicium.

5. Lebensmittel oder eine Lebensmittelzusammensetzung gemäß Anspruch 3 oder 4, wobei das poröse Silicium umfasst oder im Wesentlichen besteht aus porösem Silicium, wobei die Oberflächen des porösen Slliciums nach der Bildung des porösen Siliciums nicht weiter modifiziert worden sind.

6. Lebensmittel oder eine Lebensmittelzusammensetzung gemäß Anspruch 3 oder 4, wobei das poröse Silicium umfasst oder im Wesentlichen besteht aus oberflächenmodifiziertem Silicium.

7. Lebensmittel oder eine Lebensmittelzusammensetzung gemäß dem vorhergehenden Anspruch, wobei das oberflächenmodifizierte poröse Silicium umfasst oder im Wesentlichen besteht aus einem oder mehreren aus: abgeleitetes poröses Silicium, teiloxydiertes poröses Silicium, modifiziertes poröses Silicium mit Siliciumhydridoberflächen.

8. Lebensmittel oder eine Lebensmittelzusammensetzung gemäß Anspruch 5, wobei die Oberflächen des porösen Siliciums umfassen oder im Wesentlichen bestehen aus einem oder mehreren aus teiloxydiertem porösem Sllicium, Siliciumhydridoberflächen.

9. Lebensmittel oder eine Lebensmittelzusammensetzung gemäß irgendeinem der Ansprüche 1 bis 8, wobei das Silicium agglomerierte oder konsolidierte Siliciumteilchen enthält.

10. Lebensmittel oder eine Lebensmittelzusammensetzung gemäß dem vorhergehenden Anspruch, wobei das Silicium agglomerierte oder konsolidierte Silicium-Nanopartikel enthält.

11. Lebensmittel oder eine Lebensmittelzusammensetzung gemäß irgendeinem der Ansprüche 1 bis 8, wobei das Silicium umfasst oder im Wesentlichen besteht aus einem oder mehreren aus polykristallinen Teilchen mit Submikron-Durchmesser, amorphen Silicium-Teilchen mit Submikron-Durchmesser, hohlen Silicium-Mikropartikeln, amorphen Siliciumbeschichtungen, mikronisiertem Silicium, mikronisierten Siliciumlegierungen.

12. Lebensmittel oder eine Lebensmittelzusammensetzung gemäß irgendeinem der Ansprüche 1 bis 11, wobei das Silicium umfasst oder im Wesentlichen besteht aus Silicium mit metallurgischem Grad.

13. Lebensmittel oder eine Lebensmittelzusammensetzung gemäß irgendeinem der vorhergehenden Ansprüche, wobei der pH-Wert des Lebensmittels oder der Lebensmittelzusammensetzung 2 bis 9 ist.

14. Lebensmittel oder eine Lebensmittelzusammensetzung gemäß Anspruch 13, wobei der pH-Wert unter 7,5 ist.

15. Lebensmittel oder eine Lebensmittelzusammensetzung gemäß dem vorhergehenden Anspruch, wobei der pH-Wert kleiner oder gleich 7 ist.

16. Lebensmittel oder eine Lebensmittelzusammensetzung gemäß dem vorhergehenden Anspruch, wobei der pH-Wert kleiner oder gleich 6 ist.

17. Lebensmittel oder eine Lebensmittelzusammensetzung gemäß irgendeinem der Ansprüche 3 bis 16, wobei das poröse Silicium eine BET-Oberfläche über 0,1 m²/g hat.

18. Lebensmittel oder eine Lebensmittelzusammensetzung gemäß dem vorhergehenden Anspruch, wobei das poröse Silicium eine BET-Oberfläche über 100 m²/g hat.

19. Lebensmittel oder eine Lebensmittelzusammensetzung gemäß irgendeinem der vorhergehenden Ansprüche, wobei das Silicium in einer Menge von 0,01 bis 50 Gew.-% des Gesamtgewichts des Lebensmittels oder der Lebensmittelzusammensetzung vorliegt.

20. Lebensmittel oder eine Lebensmittelzusammensetzung gemäß dem vorhergehenden Anspruch, wobei das Silicium in einer Menge von 0,01 bis 20 Gew.-% vorliegt.

21. Lebensmittel oder eine Lebensmittelzusammensetzung gemäß dem vorhergeheneden Anspruch, wobei das Silicium in einer Menge von 0,01 bis 5 Gew.-% vorliegt.

22. Lebensmittel oder eine Lebensmittelzusammensetzung gemäß irgendeinem der Ansprüche 1 bis 21, wobei das Lebensmittel umfasst oder im Wesentlichen besteht aus einem oder mehreren der folgenden: Fleisch; Geflügel; Fisch; Gemüse; Obst; Schokolade; Süßigkeiten; Getreide und gebackene Produkte insbesondere Brot, Kuchen, Kekse, Riegel; Gebäck; Teigwaren; Milchprodukte wie Milch, Sahne, Butter, Margarine, Eier, Speiseeis, Käse; Produkte zum Herstellen von Getränken, wie Kaffeegranulat, Kaffeetabletten, Kaffeeöl, Kaffeepulver, Tee, Kakaopulver, Schokoladenpulver, Konzentrate.

23. Lebensmittel oder eine Lebensmittelzusammensetzung gemäß irgendeinem der Ansprüche 1 bis 22, wobei das Silicium mit mindestens einer Lebensmittelzutat bestückt ist.

24. Lebensmittel oder eine Lebensmittelzusammensetzung gemäß Anspruch 23, wobei das Silicium die Lebensmittelzutat einkapselt oder im Wesenltichen einkapselt oder teilweise einkapselt.

25. Lebensmittel oder eine Lebensmittelzusammensetzung gemäß irgendeinem Anspruch 23 oder 24, wobei die Lebensmittelzutat ausgewählt ist aus mindestens einem der folgenden: sauerstoffempfindliche essbare Öle; Mineralien; sauerstoffempfindliche Fette insbesondere Milchproduktfette; öllösliche Zutaten; Vitamine; Duftstoffe oder Aromen; Geschmacksstoffe; Enzyme; probiotische Bakterien; Präbiotika; Neutrazeutika; Aminosäuren; Kräuterextrakte; Kräuter; Pflanzenextrakte; essbare Säuren; Salze; Antioxidanzien, therapeutische Mittel.

26. Lebensmittel oder eine Lebensmittelzusammensetzung gemäß Anspruch 23, wobei das Silicium die Lebensmittelzutat beschichtet oder teilweise beschichtet.

27. Lebensmittel oder eine Lebensmittelzusammensetzung gemäß Anspruch 24 oder 26, wobei die Lebensmittelzutat eine Frühstückscerealie ist oder eines oder mehrere Produkte zum Herstellen von Getränken, wie Kaffeegranulat, Kaffeepulver, Tee, Kakaopulver, Schokoladenpulver.

28. Lebensmittel oder eine Lebensmittelzusammensetzung gemäß irgendeinem der Ansprüche 23 bis 27, wobei die mindestens eine Lebensmittelzutat in einer Menge von 0,01 bis 60 Gew.-% des Gesamtgewichts des Siliciums mit der einen oder mehreren Zutaten vorliegt.

29. Lebensmittel oder eine Lebensmittelzusammensetzung gemäß dem vorhergehenden Anspruch, wobei die mindestens eine Lebensmittelzutat in einer Menge von 1 bis 40 Gew.-% vorliegt.

30. Lebensmittel oder eine Lebensmittelzusammensetzung gemäß dem vorhergehenden Anspruch, wobei die mindestens eine Lebensmittelzutat in einer Menge von 2 bis 10 Gew.-% vorliegt.

31. Lebensmittel oder eine Lebensmittelzusammensetzung gemäß irgendeinem der Ansprüche 1 bis 30, wobei das Lebensmittel oder die Lebensmittelzusammensetzung in der Form eines Getränks ist.

32. Lebensmittel oder eine Lebensmittelzusammensetzung gemäß dem vorhergehenden Anspruch, wobei das Getränk ausgewählt ist aus Wasser, Tee, Kaffee, Kakao, Trinkschokolade, Obstsaft, Smoothie, Wein, Bier, Ale, Lagerbier, Spirituosen.

33. Lebensmittel oder eine Lebensmittelzusammensetzung gemäß dem vorhergehenden Anspruch, wobei das Getränk Kaffee ist.

34. Lebensmittel oder eine Lebensmittelzusammensetzung gemäß dem vorhergehenden Anspruch, wobei das Silicium mit Kaffeeöl bestückt ist.

35. Lebensmittel oder eine Lebensmittelzusammensetzung gemäß Anspruch 33, wobei das Kaffee in Form von Granulat oder einem Pulver oder einer Tablette ist und wahlweise gefriergetrocknet ist.

36. Herstellungsverfahren für ein Lebensmittel oder eine Lebensmittelzusammensetzung gemäß irgendeinem der vorhergehenden Ansprüche, umfassend Vermischen oder Kombinieren des Siliciums mit anderen Komponenten des Lebensmittels oder der Lebensmittelzusammensetzung.

37. Verwendung von festem elementarem Silicium in Lebensmitteln oder einer Lebensmittelzusammensetzung aus irgendeinem der Ansprüche 1 bis 35, zum Schutz und/oder zur Steuerung der Freisetzung, und/oder zum Überdecken des Geschmacks von einer oder mehreren Zutaten.

38. Verwendung von festem elementarem Silicium in Lebensmitteln oder einer Lebensmittelzusammensetzung aus irgendeinem der Ansprüche 1 bis 35 zum Verändern der Erscheinung eines Lebensmittels.

39. Verwendung gemäß dem vorhergehenden Anspruch, wobei die Farbe des Lebensmittels verändert wird und/oder das Lebensmittel glitzert und glänzt.

## Revendications

1. Aliment ou une composition alimentaire comprenant du silicium élémentaire solide.

2. Aliment ou une composition alimentaire selon la revendication 1, dans lequel le silicium comprend un ou plusieurs parmi le silicium amorphe, le silicium mono-cristallin et le silicium polycristallin.

3. Aliment ou une composition alimentaire selon la revendication 1 ou 2, dans lequel le silicium est le silicium poreux.

4. Aliment ou une composition alimentaire selon la revendication précédente, dans lequel le silicium poreux est choisi parmi un ou plusieurs du silicium microporeux, du silicium mésoporeux et du silicium macroporeux.

5. Aliment ou une composition alimentaire selon la revendication 3 ou 4, dans lequel le silicium poreux comprend ou est constitué essentiellement de silicium poreux dans lequel les surfaces dudit silicium poreux n'ont pas été modifiées davantage après la formation du silicium poreux.

6. Aliment ou une composition alimentaire selon la revendication 3 ou 4, dans lequel le silicium poreux comprend ou est constitué essentiellement de silicium modifié en surface.

7. Aliment ou une composition alimentaire selon la revendication précédente, dans lequel le silicium poreux modifié en surface comprend ou est constitué essentiellement d'un ou plusieurs parmi : le silicium poreux dérivé, le silicium poreux partiellement oxydé, le silicium poreux modifié avec des surfaces d'hydrure de silicium.

8. Aliment ou une composition alimentaire selon la revendication 5, dans lequel les surfaces du silicium poreux comprennent ou sont constituées essentiellement d'un ou plusieurs de silicium poreux partiellement oxydé, surfaces d'hydrure de silicium.

9. Aliment ou une composition alimentaire selon l'une quelconque des revendications 1 à 8, dans lequel le silicium comprend des particules de silicium agglomérées ou consolidées.

10. Aliment ou une composition alimentaire selon la revendication précédente, dans lequel le silicium comprend des nanoparticules de silicium agglomérées ou consolidées.

11. Aliment ou une composition alimentaire selon l'une quelconque des revendications 1 à 8, dans lequel le silicium comprend ou est constitué essentiellement d'un ou plusieurs choisis parmi les particules polycristallines de diamètre submicronique, les particules amorphes de silicium de diamètre submicronique, les microparticules de silicium creuses, les revêtements de silicium amorphe, le silicium micronisé, les alliages de silicium micronisé.

12. Aliment ou une composition alimentaire selon l'une quelconque des revendications 1 à 11, dans lequel le silicium comprend ou est constitué essentiellement de silicium de degré métallurgique.

13. Aliment ou une composition alimentaire selon l'une quelconque des revendications précédentes, dans lequel le pH de l'aliment ou de la composition alimentaire est de 2 à 9.

14. Aliment ou une composition alimentaire selon la revendication 13, dans lequel le pH est inférieur à 7,5.

15. Aliment ou une composition alimentaire selon la revendication précédente, dans lequel le pH est inférieur ou égal à 7.

16. Aliment ou une composition alimentaire selon la revendication précédente, dans lequel le pH est inférieur ou égal à 6.

17. Aliment ou une composition alimentaire selon l'une quelconque des revendications 3 à 16, dans lequel le silicium poreux a une surface BET supérieure à 0,1 m²/g.

18. Aliment ou une composition alimentaire selon la revendication précédente, dans lequel le silicium poreux a une surface BET supérieure à 100 m²/g.

19. Aliment ou une composition alimentaire selon l'une quelconque des revendications précédentes, dans lequel le silicium est présent en une quantité de 0,01 à 50 % en poids du poids total de l'aliment ou de la composition alimentaire.

20. Aliment ou une composition alimentaire selon la revendication précédente, dans lequel le silicium est présent en une quantité de 0,01 à 20 % en poids.

21. Aliment ou une composition alimentaire selon la revendication précédente, dans lequel le silicium est présent en une quantité de 0,1 à 5 % en poids.

22. Aliment ou une composition alimentaire selon l'une quelconque des revendications 1 à 21, dans lequel l'aliment comprend ou est constitué essentiellement d'un ou plusieurs des suivants : viande ; viande de volaille ; poisson ; légumes ; fruits ; chocolat ; sucreries ; céréales et produits cuits y compris le pain, les gâteaux, les biscuits, les barres nutritives ; pâtisserie ; pâtes ; produits laitiers comme le lait, la crème, le beurre, la margarine, les oeufs, la crème glacée, le fromage ; produits pour préparer des boissons, comme le café granulé, les tablettes de café, l'huile de café, la poudre de café, le thé, le cacao, la poudre de chocolat, les concentrés.

23. Aliment ou une composition alimentaire selon l'une quelconque des revendications 1 à 22, dans lequel le silicium est chargé avec au moins un ingrédient alimentaire.

24. Aliment ou une composition alimentaire selon la revendication 23, dans lequel le silicium encapsule ou encapsule essentiellement ou encapsule partiellement l'ingrédient alimentaire.

25. Aliment ou une composition alimentaire selon la revendication 23 ou 24, dans lequel l'ingrédient alimentaire est choisi parmi au moins un des suivants : huiles comestibles sensibles à l'oxygène ; minéraux ; graisses sensibles à l'oxygène, y compris les graisses laitières ; ingrédients solubles dans l'huile ; vitamines ; fragrances ou arômes ; flaveurs ; enzymes ; bactéries probiotiques ; agents prébiotiques ; nutraceutiques ; acides aminés ; extraits herbaux ; herbes ; extraits végétaux ; acides comestibles ; sel ; antioxidants, agents thérapeutiques.

26. Aliment ou une composition alimentaire selon la revendication 23, dans lequel le silicium revête ou partiellement revête l'ingrédient alimentaire.

27. Aliment ou une composition alimentaire selon la revendication 24 ou 26, dans lequel l'ingrédient alimentaire est une céréale de petit déjeuner, ou un ou plusieurs produits pour préparer des boissons, comme le café granulé, la poudre de café, le thé, la poudre de cacao, la poudre de chocolat.

28. Aliment ou une composition alimentaire selon l'une quelconque des revendications 23 à 27, dans lequel l'au moins un ingrédient alimentaire est présent en une quantité de 0,01 à 60 % en poids du poids total du silicium y compris l'un ou plusieurs ingrédients.

29. Aliment ou une composition alimentaire selon la revendication précédente, dans lequel l'au moins un ingrédient alimentaire est présent en une quantité de 1 à 40 % en poids.

30. Aliment ou une composition alimentaire selon la revendication précédente, dans lequel l'au moins un ingrédient alimentaire est présent en une quantité de 2 à 10 % en poids.

31. Aliment ou une composition alimentaire selon l'une quelconque des revendications 1 à 30, dans lequel l'aliment ou la composition alimentaire est en forme de boisson.

32. Aliment ou une composition alimentaire selon la revendication précédente, dans lequel la boisson est sélectionnée parmi l'eau, le thé, le café, le cacao, le chocolat buvable, jus de fruits, frappé aux fruits, vin, bière, ale, bière de fermentation basse, spiritueux.

33. Aliment ou une composition alimentaire selon la revendication précédente, dans lequel la boisson est le café.

34. Aliment ou une composition alimentaire selon la revendication précédente, dans lequel le silicium est chargé d'huile de café.

35. Aliment ou une composition alimentaire selon la revendication 33, dans lequel le café est en forme de granules ou d'une poudre ou d'une tablette et peut être optionnellement lyophilisé.

36. Procédé de production de l'aliment ou de la composition alimentaire selon l'une quelconque des revendications précédentes, comprenant mélanger ou combiner le silicium avec d'autres composantes de l'aliment ou de la composition alimentaire.

37. Utilisation de silicium élémentaire solide dans un aliment ou une composition alimentaire de l'une quelconque des revendications 1 à 35, pour protéger et/ou contrôler la libération de, et/ou pour masquer le goût d'un ou de plusieurs ingrédients.

38. Utilisation de silicium élémentaire solide dans un aliment ou une composition alimentaire de l'une quelconque des revendications 1 à 35, pour modifier l'apparence d'un aliment.

39. Utilisation selon la revendication précédente, dans laquelle la couleur de l'aliment est modifiée et/ou l'aliment scintille ou brille.
